# EUROPEAN PATENT APPLICATION

(11) **EP 2 907 795 A1**
(43) Date of publication of application: **19.08.2015**
(21) Application number: 13846597.6
(22) Date of filing: 15.10.2013
(51) Int. Cl.: C03C 27/06, E06B 3/66, B32B 17/06, C03C 8/04

(54) **DOUBLE-PANE GLASS, AND MANUFACTURING METHOD FOR DOUBLE-PANE GLASS**

(30) Priority: 15.10.2012 JP 2012228423
(71) Applicant: Asahi Glass Company, Limited, Tokyo 100-8405 (JP)
(72) Inventor: KAWAHARA, Koji, Tokyo 100-8405 (JP); KANNO, Ryo, Tokyo 100-8405 (JP); KATO, Keisuke, Tokyo 100-8405 (JP)
(74) Representative: Müller-Boré & Partner Patentanwälte PartG mbB
(86) International application number: PCT/JP2013/077916
(87) International publication number: WO 2014/061639

(57) **Abstract**

Insulated glazing includes a gap between a first surface of a first glass substrate and a second surface of a second glass substrate. The first and second surfaces face each other. The gap is hermetically sealed by a sealing member. The sealing member includes a metal member of a frame shape and first and second joining layers. The metal member includes a third surface and a fourth surface. The first joining layer is placed in a frame shape on the first surface of the first glass substrate. The second joining layer is placed in a frame shape on the second surface of the second glass substrate, and is in a position offset from the position of the first joining layer when viewed in a thickness direction of the insulated glazing. The first joining layer is bonded to part of the third surface of the metal member. The second joining layer is bonded to part of the fourth surface of the metal member.

## Description

### TECHNICAL FIELD

The present invention relates to insulated glazing and methods of producing insulated glazing.

### BACKGROUND ART

So-called "vacuum insulated glazing", which is formed by stacking a pair of glass substrates in layers with a gap interposed between them and maintained in a low-pressure or vacuum state, has a good heat insulating effect and is therefore used widely for, for example, window glass for constructions such as buildings and houses.

In the vacuum insulated glazing, the sealing performance of a sealing member provided around the gap to maintain the gap in a vacuum state has a significant effect over the heat insulating properties of the entire vacuum insulated glazing. This is because if the sealing member has poor sealing properties, components such as air and/or moisture in the atmosphere easily enter the gap through the sealing member, thereby decreasing the degree of vacuum of the gap. Therefore, work is proceeding with sealing members having better sealing properties.

In particular, recently, a sealing member formed of a metal member and a non-metal member has been developed. For example, Patent Document 1 discloses forming a sealing structure by combining a metal member and glass frit in vacuum insulated glazing.

### [Prior Art Document]

### [Patent Document]

[Patent Document 1] Specification of European Patent No. 2099997

### SUMMARY OF THE INVENTION

### PROBLEMS TO BE SOLVED BY THE INVENTION

As described above, Patent Document 1 discloses a sealing structure into which a metal member and glass frit are combined.

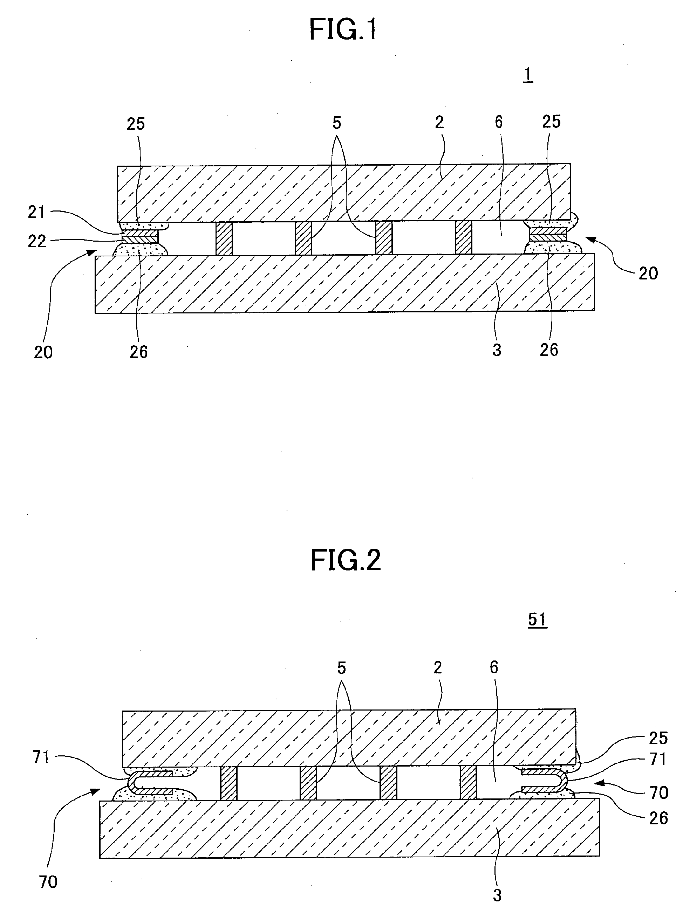

For example, Patent Document 1 discloses vacuum insulated glazing 1 including a first glass substrate 2, a second glass substrate 3, a gap 6 formed between the glass substrates with spacers 5, and a sealing structure 20 formed around the gap 6 as a first configuration as illustrated in FIG. 1. This sealing structure 20 is formed of a laminate of first glass frit 25 on the first glass substrate 2 side, a first metal member 21, a second metal member 22, and a second glass frit 26 on the second glass substrate 3 side that are stacked in layers in this order.

According to this sealing structure 20, however, the vacuum insulated glazing 1 may warp or deform when a temperature difference is caused between the first glass substrate 2 and the second glass substrate 3 to cause a difference in the degree of thermal expansion between them. In particular, when such a phenomenon becomes conspicuous, the vacuum insulated glazing 1 may be broken.

Furthermore, Patent Document 1 also illustrates vacuum insulated glazing 51 having another structure as illustrated in FIG. 2. According to this second configuration, a sealing structure 70 is formed by stacking the first glass frit 25, a U-shaped metal member 71, and the second glass frit 26 in layers in this order. This vacuum insulated glazing 51 may have a function of deforming to some extent because the metal member 71 of the sealing structure 70 has a U shape.

There is a problem, however, in that this sealing structure 70 is extremely difficult to produce.

For example, it is necessary to prepare the U-shaped metal member 71 having a frame shape in order to produce the sealing structure 70. It is virtually impossible, however, to provide a metal member of such a three-dimensional shape as a one-piece product (a seamless member). Therefore, it is necessary to join multiple members into a one-piece body by welding or the like in order to obtain the U-shaped metal member 71 having a frame shape.

Here, it is necessary for the U-shaped metal member 71 to be formed extremely thin so as to fall within the height of the gap (for example, 150 µm). It is extremely difficult, however, to form such a thin member of a complicated shape by joining such as welding. Furthermore, because the U-shaped metal member 71 is used as a member for a sealing structure, the joints are required to have high sealing characteristics without a defect or gap. A joining technique of extremely high accuracy is necessary to form such joints having high sealing characteristics in a member of a complicated shape.

Thus, each of the two types of vacuum insulated glazing 1 and 51 described in Patent Document 1 is far from satisfactory in the structure of the sealed part, so that there is still a demand for vacuum insulated glazing that is less likely to be affected by deformation due to a thermal stress and is relatively easy to produce.

The present invention is made in view of such a background, and the present invention has an object of providing insulated glazing that is capable of significantly reducing the effect of deformation due to a thermal stress and has a sealing structure that is relatively easy to produce. Furthermore, the present invention has an object of providing a method of producing insulated glazing that is capable of significantly reducing the effect of deformation due to a thermal stress and has a sealing structure that is relatively easy to produce.

### MEANS FOR SOLVING THE PROBLEMS

According to the present invention, insulated glazing is provided that includes a gap between a first surface of a first glass substrate and a second surface of a second glass substrate, the first and second surfaces facing each other, wherein the gap is hermetically sealed by a sealing member, the sealing member includes a metal member of a frame shape and first and second joining layers, the metal member including a third surface and a fourth surface, the first joining layer is placed in the frame shape on the first surface of the first glass substrate, the second joining layer is placed in the frame shape on the second surface of the second glass substrate, and is in a position offset from a position of the first joining layer when viewed in a thickness direction of the insulated glazing, the first joining layer is bonded to a part of the third surface of the metal member, and the second joining layer is bonded to a part of the fourth surface of the metal member.

Here, the insulated glazing according to the present invention may be configured with a pressure inside the gap less than an atmospheric pressure.

Furthermore, according to the insulated glazing according to the present invention, an overlap between the first joining layer and the second joining layer may be absent when the insulated glazing is viewed in a thickness direction thereof.

Furthermore, according to the insulated glazing according to the present invention, the first joining layer may be inside the second joining layer when the insulated glazing is viewed in the thickness direction thereof, and a minimum distance in a direction parallel to the second surface of the second glass substrate between an outer end of a first bonded part and an inner end of a second bonded part may be in a range of 0.1 mm to 100 mm, where the first bonded part is a region of the third surface of the metal member to which the first joining layer is bonded and the second bonded part is a region of the fourth surface of the metal member to which the second joining layer is bonded.

Furthermore, according to the insulated glazing according to the present invention, at least one of the first joining layer and the second joining layer may include a solidified glass layer.

Furthermore, according to the insulated glazing according to the present invention, the metal member may be a one-piece product free of a joint.

Furthermore, according to the insulated glazing according to the present invention, the metal member may have a shape such that a height of the third surface changes from one end to another end of the third surface in a cross-sectional view.

Furthermore, according to the insulated glazing according to the present invention, at least one of the third surface and the fourth surface of the metal member may be corrugated or embossed.

Furthermore, according to the insulated glazing according to the present invention, the first glass substrate may have such a shape as to lie over and cover at least a part of the second joining layer when the insulated glazing is viewed in a thickness direction thereof.

Furthermore, according to the present invention, a method of producing insulated glazing including first and second glass substrates stacked in layers with a gap interposed therebetween is provided that includes the steps of forming a first joining layer in a frame shape on a first surface of the first glass substrate and forming a second joining layer in the frame shape on a second surface of the second glass substrate; preparing a metal member of the frame shape that includes a third surface and a fourth surface; forming an assembly by stacking the first glass substrate, the metal member, and the second glass substrate in layers in order described, wherein the first glass substrate is placed with the first surface facing the third surface of the metal member and the second glass substrate is placed with the second surface facing the fourth surface of the metal member, so that the second joining layer is in a position offset from a position of the first joining layer when the assembly is viewed in a stacking direction thereof; and firing the assembly to bond the first and second joining layers and the metal member.

Here, according to the method of producing insulated glazing according to the present invention, at least one of the first joining layer and the second joining layer may include a solidified glass layer.

Furthermore, according to the method of producing insulated glazing according to the present invention, the metal member may be a one-piece product free of a joint.

Furthermore, according to the method of producing insulated glazing according to the present invention, the first glass substrate may have such a shape as to lie over and cover at least a part of the second joining layer when the insulated glazing is viewed in a thickness direction thereof, and the step of firing the assembly may bond the second joining layer and the metal member while pressing the third surface of the metal member by the first surface.

Furthermore, according to the method of producing insulated glazing according to the present invention, the step of firing the assembly may be performed by retaining at least the first and second joining layers of the assembly at a temperature of 350°C to 600°C for 5 seconds to 180 minutes and thereafter cooling the assembly to room temperature.

Furthermore, according to the method of producing insulated glazing according to the present invention, the step of firing the assembly may be performed while applying a pressure of 25 kg/m² to 1000 kg/m² on the assembly.

### EFFECTS OF THE INVENTION

According to the present invention, it is possible to provide insulated glazing that is capable of significantly reducing the effect of deformation due to a thermal stress and has a sealing structure that is relatively easy to produce. Furthermore, according to the present invention, it is possible to provide a method of producing insulated glazing that is capable of significantly reducing the effect of deformation due to a thermal stress and has a sealing structure that is relatively easy to produce.

### BRIEF DESCRIPTION OF THE DRAWINGS

FIG. 1 is a cross-sectional view schematically illustrating conventional vacuum insulated glazing.
FIG. 2 is a cross-sectional view schematically illustrating conventional second vacuum insulated glazing.
FIG. 3 is a cross-sectional view schematically illustrating vacuum insulated glazing (first vacuum insulated glazing) according to a first embodiment of the present invention.
FIG. 4 is a schematic diagram illustrating a sealing member on an enlarged scale in order to explain a stress relaxation function in the first vacuum insulated glazing.
FIG. 5 is a cross-sectional view schematically illustrating vacuum insulated glazing (second vacuum insulated glazing) according to a second embodiment of the present invention.
FIG. 6 is a cross-sectional view schematically illustrating vacuum insulated glazing (third vacuum insulated glazing) according to a third embodiment of the present invention.
FIG. 7 is a schematic enlarged cross-sectional view of part of a sealing member.
FIG. 8 is a diagram schematically illustrating an embodiment of a production flow of insulated glazing according to the present invention.

### EMBODIMENTS FOR CARRYING OUT THE INVENTION

A description is given below, with reference to the accompanying drawings, of embodiments of the present invention.

### [First Vacuum Insulated Glazing]

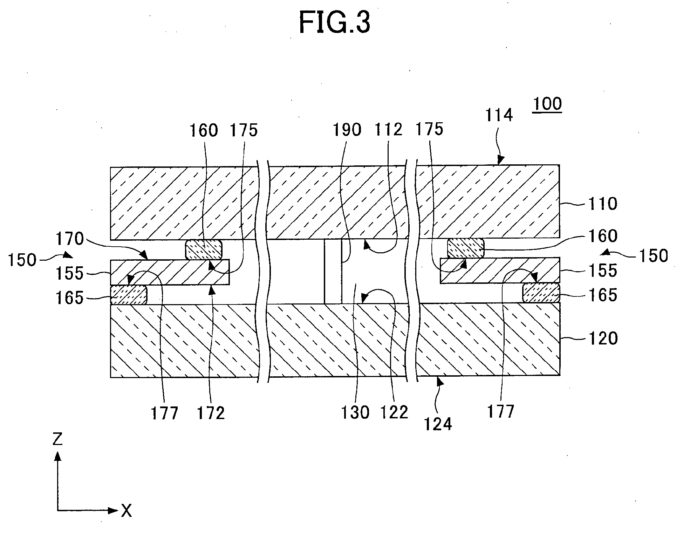

A description is given below, with reference to FIG. 3, of insulated glazing according to a first embodiment of the present invention.

In the following description, "vacuum insulated glazing" is taken as an example of insulated glazing, and a description is given of configurations and features thereof. It is clear to a person skilled in the art, however, that the present invention is not limited to "vacuum insulated glazing" and may also be similarly provided for "non-vacuum" insulated glazing.

FIG. 3 schematically illustrates a configuration of vacuum insulated glazing (first vacuum insulated glazing).

As illustrated in FIG. 3, first vacuum insulated glazing 100 according to the first embodiment of the present invention includes a first glass substrate 110, a second glass substrate 120, a gap 130 formed between the glass substrates 110 and 120, multiple spacers 190 for retaining the gap 130, and a sealing member 150 that keeps the gap 130 hermetically sealed. The sealing structure 150 is formed by stacking a first joining layer 160, a metal member 155, and a second joining layer 165 in layers in this order.

The first glass substrate 110 includes a first surface 112 and a first exterior surface 114. In the vacuum insulated glazing 100, the first glass substrate 110 is placed so that the first exterior surface 114 faces outward. Likewise, the second glass substrate 120 includes a second surface 122 and a second exterior surface 124. In the vacuum insulated glazing 100, the second glass substrate 120 is placed so that the second exterior surface 124 faces outward. Accordingly, the gap 130 is formed between the first surface 112 of the first glass substrate 110 and the second surface 122 of the second glass substrate 120.

Normally, a vacuum is maintained inside the gap 130. Here, the degree of vacuum of the gap 130 is not limited in particular, and may be any pressure lower than the atmospheric pressure. In general, the pressure in the gap 130 is approximately 0.2 Pa to approximately 0.001 Pa.

The gap 130 may be filled with an inert gas such as argon at a pressure lower than the atmospheric pressure. That is, in the present application, it is assumed that the "vacuum insulated glazing" is not necessarily limited to those in which the gap is in a vacuum state and that the term "vacuum insulated glazing" means any insulated glazing in which the pressure inside the gap is less than the atmospheric pressure.

When necessary, the vacuum insulated glazing 100 may include one or two or more spacers 190 inside the gap 130. The spacers 190 serve to keep the gap 130 in a desired shape. The spacers 190, however, may be omitted if it is possible to keep the gap 130 in a desired shape without the spacers 190, for example, in the case where the degree of vacuum of the gap 130 is low or in the case where the gap 130 is filled with an inert gas or the like at a certain pressure.

The sealing member 150 is a member for keeping the gap 130 hermetically sealed. The sealing member 150 is formed entirely around the gap 130.

The sealing member 150 includes the first joining layer 160, the metal member 155, and the second joining layer 165.

The first joining layer 160 is provided in a "frame shape" in a peripheral portion of the first glass substrate 110 on the first surface 112 of the first glass substrate 110. Likewise, the second joining layer 165 is provided in a "frame shape" in a peripheral portion of the second glass substrate 120 on the second surface 122 of the second glass substrate 120.

Here, in the present application, the term "frame shape" means a generic term for shapes formed of a "frame" defined by an outer edge and an inner edge with an inside portion of a flat-plate shape being removed in a plan view. The outer edge and/or the inner edge of a member of the "frame shape" is not necessarily limited to a substantially rectangular parallelepiped shape such as a frame, and may be, for example, shapes of a polygon such as a triangle, a substantial triangle, a trapezoid, a substantial trapezoid, a pentagon, and a substantial pentagon; a circle; a substantial circle; an ellipse; and a substantial ellipse. Furthermore, the outer edge and the inner edge of a member of the "frame shape" do not always have to be similar figures, and may be, for example, totally different in shape.

The metal member 155 includes a third surface 170 and a fourth surface 172, and has a shape of the "frame shape." Part of the third surface 170 of the metal member 155 is bonded to the first joining layer 160, and part of the fourth surface 172 of the metal member 155 is bonded to the second joining layer 165. It is possible to hermetically seal the gap 130 by placing this sealing member 150 around the gap 130.

The second joining layer 165 may be placed in an annular shape along a peripheral portion of the second surface 122 of the second glass substrate 120 as illustrated in FIG. 3 when the vacuum insulated glazing 100 is viewed from above (in a thickness direction, the Z direction in FIG. 3). Likewise, the metal member 155 may be placed in an annular shape along a peripheral portion of the second surface 122 of the second glass substrate 120.

Here, the first joining layer 160 has a feature of being provided in a position offset from the second joining layer 165 when the vacuum insulated glazing 100 is viewed from above (in the thickness direction, the Z direction in FIG. 3). For example, in the case of FIG. 3, the first joining layer 160 is provided inside the second joining layer 165.

In the case of thus forming the sealing member 150, it is possible to reduce the effect of a difference in thermal expansion between the first glass substrate 110 and the second glass substrate 120 because of the deforming function of the metal member 155 in horizontal directions (the X direction in FIG. 3) parallel to the second surface 122 of the second glass substrate 120, even when a temperature difference is caused between the glass substrates 110 and 120.

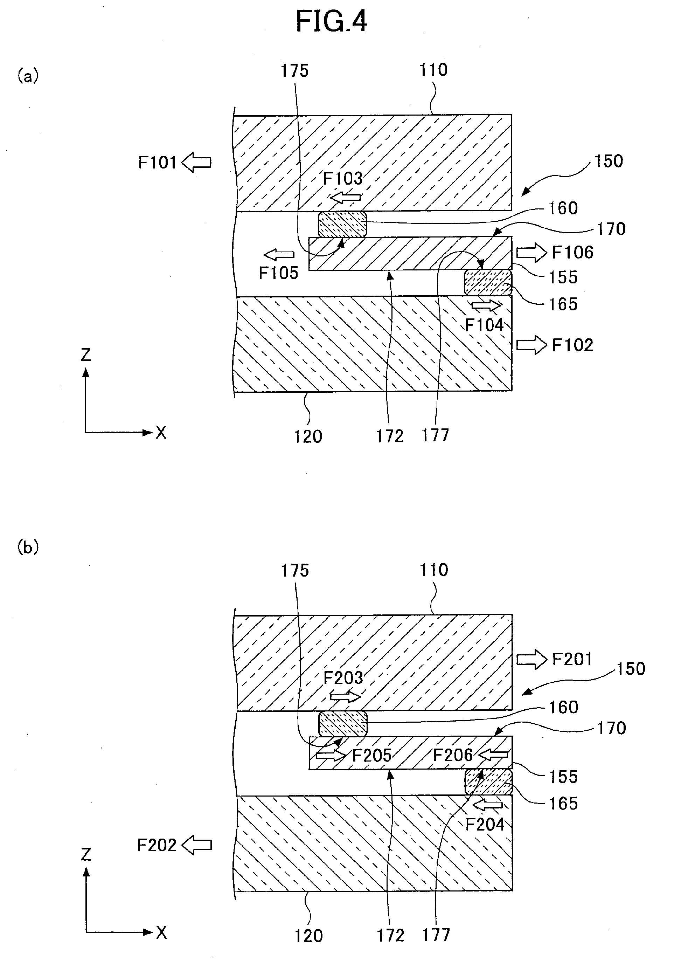

A more detailed description is given below, with reference to FIG. 4, of this effect.

FIG. 4 schematically illustrates an enlarged cross-sectional view of part of the sealing member 150.

First, it is assumed that the temperature becomes lower on the first glass substrate 110 side than on the second glass substrate 120 side in the vacuum insulated glazing 100.

In this case, the first glass substrate 110 is subject to a stress in a direction to contract, and the second glass substrate 120 is subject to a stress in a direction to expand.

To be more specific, as illustrated in FIG. 4(a), the first glass substrate 110 is urged to deform in the direction of arrow F101, so that the first joining layer 160 as well is subject to a stress in the direction of arrow F103. On the other hand, the second glass substrate 120 is urged to deform in the direction of arrow F102, so that the second joining layer 165 as well is subject to a stress in the direction of arrow F104.

As a result, the left end of the metal member 155 is subject to a stress in the direction of arrow F105, and the right end of the metal member 155 is subject to a stress in the direction of arrow F106. Here, it should be noted that the first joining layer 160 and the second joining layer 165 are provided in offset positions when the vacuum insulated glazing 100 is viewed from above (in the thickness direction) as described above.

The third surface 170 of the metal member 155 is not restricted by other members except for the part bonded to the first joining layer 160 (hereinafter referred to as "first bonded part (175)"), and the fourth surface 172 of the metal member 155 is not restricted by other members except for the part bonded to the second joining layer 165 (hereinafter referred to as "second bonded part (177)"). Therefore, the metal member 155 is allowed to deform in the directions of arrow F105 and arrow 106.

Such expansion of the metal member 155 in the directions of arrow F105 and arrow 106 (the X direction) allows the sealing member 150 to follow the stresses F101 and F102 working on the first glass substrate 110 and the second glass substrate 120 so as to reduce the effect due to a difference in thermal expansion between the glass substrates 110 and 120.

Next, it is assumed that the temperature becomes higher on the first glass substrate 110 side than on the second glass substrate 120 side in the vacuum insulated glazing 100.

In this case, the first glass substrate 110 is subject to a stress in a direction to expand, and the second glass substrate 120 is subject to a stress in a direction to contract.

To be more specific, as illustrated in FIG. 4(b), the first glass substrate 110 is urged to deform in the direction of arrow F201, so that the first joining layer 160 as well is subject to a stress in the direction of arrow F203. On the other hand, the second glass substrate 120 is urged to deform in the direction of arrow F202, so that the second joining layer 165 as well is subject to a stress in the direction of arrow F204.

As a result, the left end of the metal member 155 is subject to a stress in the direction of arrow F205, and the right end of the metal member 155 is subject to a stress in the direction of arrow F206.

Here, the third surface 170 of the metal member 155 is not restricted by other members except for the first bonded part 175, and the fourth surface 172 of the metal member 155 is not restricted by other members except for the second bonded part 177. Therefore, the metal member 155 is allowed to deform in the directions of arrow F205 and arrow 206.

Such expansion of the metal member 155 in the directions of arrow F205 and arrow 206 (the X direction) allows the sealing member 150 to follow the stresses F201 and F202 working on the first glass substrate 110 and the second glass substrate 120 so as to reduce the effect due to a difference in thermal expansion between the glass substrates 110 and 120.

Thus, according to the vacuum insulated glazing 100, the deformation function of the metal member 155 included in the sealing member 150 makes it possible to significantly reduce a warp or deformation of the vacuum insulated glazing 100.

Furthermore, the sealing member 150 of the vacuum insulated glazing 100 does not include a metal member of a complicated three-dimensional shape such as a U shape. Therefore, it is possible to relatively easily produce the sealing member 150.

Furthermore, because the metal member 155 is formed to have a planar or substantially planar cross section and have a frame shape in a plan view, the processing of corners also is easy. That is, when the metal member has a U-shaped cross section, it is extremely difficult to accurately form corners. It is easily made possible for the metal member 155 having a frame shape, however, to be formed of a one-piece product without joints (seamless member) or formed by combining multiple planar members, so that there is no troubling to address corners.

Thus, the vacuum insulated glazing 100 according to the first embodiment of the present invention makes it possible to provide insulated glazing that is capable of significantly reducing the effect of deformation due to a thermal stress and has a sealing structure that is relatively easy to produce.

### [Second Vacuum Insulated Glazing]

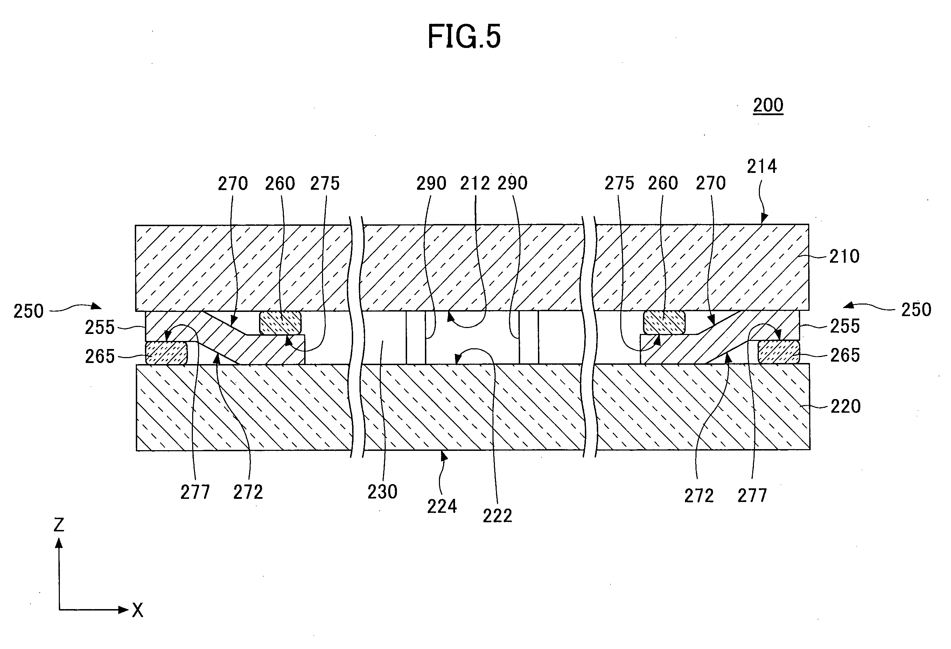

Next, a description is given, with reference to FIG. 5, of vacuum insulated glazing according to a second embodiment of the present invention.

FIG. 5 schematically illustrates a configuration of vacuum insulated glazing according to the second embodiment of the present invention (second vacuum insulated glazing).

As illustrated in FIG. 5, second vacuum insulated glazing 200 basically has the same configuration as the above-described first vacuum insulated glazing 100 illustrated in FIG. 3. Accordingly, in FIG. 5, the reference numerals of FIG. 3 plus 100 are used as reference numerals for the same members as those in FIG. 3.

The second vacuum insulated glazing 200 illustrated in FIG. 5, however, is different from the first vacuum insulated glazing 100 illustrated in FIG. 3 in the structure of the sealing member. That is, according to the second vacuum insulated glazing 200 illustrated in FIG. 5, a sealing member 250 includes a "stepped" metal member 255 in place of a flat metal member.

To be more specific, in a cross-sectional view of the metal member 255, a third surface 270 of the metal member 255 has an outline that changes in height from substantially the same level as a first surface 212 of a first glass substrate 210 to the part bonded to a first joining layer 260, that is, a first bonded part 275. Likewise, a fourth surface 272 of the metal member 255 has an outline that changes in height from the part bonded to a second joining layer 265, that is, a second bonded part 277, to substantially the same level as a second surface 222 of a second glass substrate 220.

In the case of FIG. 5, the surfaces 270 and 272 of the metal member 255 are indicated by linearly bent outlines. The shape of the metal member 255, however, is not limited to this. That is, the surfaces 270 and 272 of the metal member 255 may have outlines curved in a rounded manner or formed by a combination of a straight line and a curved line.

Furthermore, although not clear from FIG. 5, it should be noted that the third surface 270 of the metal member 255 is not bonded to other members in parts other than the first bonded part 275 and that the fourth surface 272 of the metal member 255 is not bonded to other members in parts other than the second bonded part 277.

The sealing member 250 including the metal member 255 of such a shape is preferable to the above-described sealing member 150 including the metal member 155. That is, in the case of the metal member 255 illustrated in FIG. 5, when a temperature difference is caused between the first glass substrate 210 and the second glass substrate 220, the effect of a difference in thermal expansion is easily reducible because the metal member 255 has a shape that is easily deformable in directions (the X direction in FIG. 5) parallel to the second surface 222 of the second glass substrate 220.

Furthermore, in the case where the first glass substrate 210 is shaped so as to lie over and cover at least part of the second joining layer 265, that is, in the case where an end of the first glass substrate 210 is positioned on top of or outside the second joining layer 265, when viewed from above (the Z direction), it is easily made possible to perform production so that the first joining layer 260 and the second joining layer 265 are equal in joining strength. It is preferable that the first and second joining layers 260 and 265 be equal in joining strength because cracks due to stress concentration or the like are less likely to occur.

As described below, when vacuum insulated glazing according to an embodiment of the present invention is produced, a first surface of a first glass substrate comes into contact with and presses the third surface of the metal member 255 to apply pressure on the second joining layer 265 and a second surface of a second glass substrate comes into contact with and presses the fourth surface of the metal member 255 to apply pressure on the first joining layer 260, with a metal member of a frame shape being interposed between the two glass substrates. As a result of both the first and second joining layers 260 and 265 being thus pressed to be bonded to the metal member 255, it is possible to substantially equalize the joining strengths with ease. With respect to the bonding of a metal member and a joining layer, for example, glass frit, pressing at the time of bonding is one major factor that affects joining strength. It is clear that the joining layer is desirably substantially uniform in its entirety, and it contributes to improvement in the maintainability and durability of sealing that the first and second joining layers 260 and 265 are equal in joining strength and do not differ greatly in joining strength at least locally.

Furthermore, because the sealing member is interposed between two glass substrates, the problem of the breakage of the sealing member during the transportation of vacuum insulated glazing is significantly controlled.

It is preferable to perform production in this manner because the metal member 255 in the sealing member 250 tends to be eventually formed like FIG. 5 so that the above-described effects are achieved at the same time. The first and second glass substrates and the metal member may end up in being out of contact or being formed as illustrated in FIG. 3.

It is clear to a person skilled in the art that it is possible for the vacuum insulated glazing 200 illustrated in FIG. 5 to achieve the same effects as the first vacuum insulated glazing 100.

### [Third Vacuum Insulated Glazing]

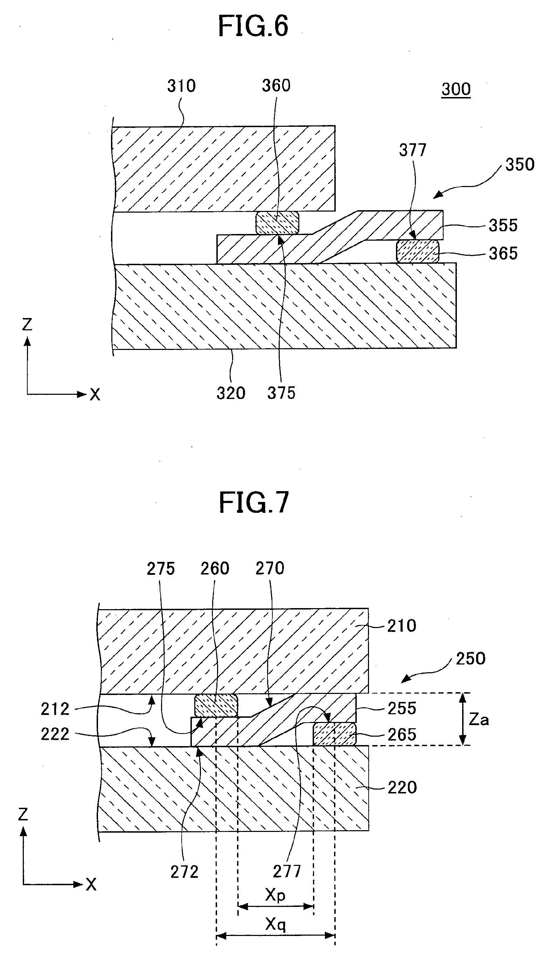

Next, a description is given, with reference to FIG. 6, of vacuum insulated glazing according to a third embodiment of the present invention.

FIG. 6 schematically illustrates a configuration of vacuum insulated glazing according to the third embodiment of the present invention (third vacuum insulated glazing).

As illustrated in FIG. 6, third vacuum insulated glazing 300 basically has the same configuration as the above-described second vacuum insulated glazing 200 illustrated in FIG. 5. Accordingly, in FIG. 6, the reference numerals of FIG. 5 plus 100 are used as reference numerals for the same members as those in FIG. 5.

The third vacuum insulated glazing 300 illustrated in FIG. 6, however, is different from the second vacuum insulated glazing 200 illustrated in FIG. 5 in the dimensional relationship between the first glass substrate and the second glass substrate.

That is, according to the second vacuum insulated glazing 200 illustrated in FIG. 5, the positions of the ends of the first glass substrate 210 and the second glass substrate 220 are aligned when viewed from above (the Z direction). On the other hand, according to the third vacuum insulated glazing 300 illustrated in FIG. 6, the end of a first glass substrate 310 is inside the end of a second glass substrate 320 when viewed from above (the Z direction).

In the case of FIG. 6, when viewed in the thickness direction (the Z direction), the first glass substrate 310 is terminated just near the center of the "step" of a metal member 355. This, however, is a mere example, and the end of the first glass substrate 310 may be terminated in any region as long as the region is outside a first bonded part 375.

According to the vacuum insulated glazing 300 of such a configuration, the metal member 355 is less restricted by other members when contracting because of a temperature difference between the two glass substrates. For example, when the first glass substrate 310 expands relative to the second glass substrate 320 (for example, as in the case of FIG. 4(b)), the metal member 355 needs to contract in the X direction. At this point, because the first glass substrate 310 is not present over the metal member 355 in the vacuum insulated glazing 300, the metal member 355 is allowed to deform "three-dimensionally." Therefore, according to the vacuum insulated glazing 300, a sealing member 350 is provided with greater deformability.

### [About Component Members of Vacuum Insulated Glazing]

Next, a more detailed description is given of component members that form vacuum insulated glazing according to an embodiment of the present invention as described above. In the following description, the above-described second vacuum insulated glazing 200 is taken as an example, and its component members are described. Accordingly, the reference numerals of component members correspond to the reference numerals used in FIG. 5.

### [Glass Substrates 210, 220]

The composition of glass that forms the glass substrates 210 and 220 is not limited in particular. The glass of the glass substrates 210 and 222 may be, for example, soda-lime glass and/or alkali-free glass.

Furthermore, the compositions of the first glass substrate 210 and the second glass substrate 220 may be either equal or different.

### [Spacers 290]

Spacers 290 may have the same material, shape, and/or dimensions as spacers used in conventional vacuum insulated glazing.

### [Joining Layers 260, 265]

The joining layers 260 and 265 that are components of the sealing member 250 may be formed of any material as long as having bondability with respect to the glass substrates 210 and 220 and the metal member 255. Furthermore, the first joining layer 260 and the second joining layer 265 may be formed of either the same material or different materials.

For examples, the joining layers 260 and 265 may be solidified glass layers.

The solidified glass layers are formed by firing paste containing glass frit. The solidified glass layers include a glass component and may further include ceramic particles.

The composition of the glass component included in the solidified glass layers is not limited in particular. The glass component included in the solidified glass layers may be, for example, ZnO-Bi₂O₃-B₂O₃-based or ZnO-SnO-P₂O₅-based glass.

Table 1 illustrates a composition of ZnO-Bi₂O₃-B₂O₃-based glass that may be used as a glass component included in the solidified glass layers. Furthermore, Table 2 illustrates a composition of ZnO-SnO-P₂O₅-based glass that may be used as a glass component included in the solidified glass layers.

**Table 1**

| Composition | Content (mass%) |
|---|---|
| Bi₂O₃ | 70-90 |
| ZnO | 5-15 |
| B₂O₃ | 2-8 |
| Al₂O₃ | 0.1-5 |
| SiO₂ | 0.1-2 |
| CeO₂ | 0.1-5 |
| Fe₂O₃ | 0.01-0.2 |
| CuO | 0.01-5 |

**Table 2**

| Composition | Content (mass%) |
|---|---|
| P₂O₅ | 27-35 |
| SnO | 25-35 |
| ZnO | 25-45 |
| B₂O₃ | 0-5 |
| Ga₂O₃ | 0-3 |
| CaO | 0-10 |
| SrO | 0-10 |
| Al₂O₃ | 0-3 |
| In₂O₃ | 0-3 |
| La₂O₃ | 0-3 |
| Al₂O₃+In₂O₃+La₂O₃ | 0-7 |

Alternatively, one of the joining layers 260 and 265 may include a metal sprayed surface coating.

For example, when the first joining layer 260 includes a sprayed coating, it is possible to bond the metal member 255 to the first joining layer 260 by, for example, brazing, soldering or the like in the assembly process.

Such a metal sprayed coating may be formed in a frame shape on one surface of the glass substrate by, for example, electric arc spraying or plasma spraying.

Materials of the metal sprayed coating may be, but are not limited to, for example, copper (and copper alloys), aluminum (and aluminum alloys), zinc (and zinc alloys), etc.

Thus, the joining layers 260 and 265 may include any materials, such as ceramics, glass, metal, etc., as long as being bondable to the metal member 255. Furthermore, the joining layers 260 and 265 do not necessarily have to be formed of a single layer, and may be formed of multiple layers.

The thickness of the joining layer (the thickness of the entirety when formed of multiple layers) may be in the range of, but is not limited to, for example, 10 µm to 1000 µm when the pressure in the gap is less than the atmospheric pressure, or 10 µm to 15000 µm when the gap is filled with an inert gas or the like at a certain pressure.

### [Metal Member 255]

The metal material of the metal member 255 is not limited to a particular kind. The metal member 255 may be selected from, for example, aluminum and aluminum alloys, copper and copper alloys, titanium and titanium alloys, stainless steel, etc.

The metal member 255 is foil or plate-shaped, and may have a thickness ranging from 5 µm to 500 µm when the pressure in the gap is less than the atmospheric pressure or a thickness ranging from 5 µm to 700 µm when the gap is filled with an inert gas or the like at a certain pressure.

Furthermore, the shape of the metal member 255 is not limited in particular at an intermediate preparation stage as long as the finally provided shape is a frame shape. Accordingly, the metal member 255 of a frame shape may be formed by, for example, joining multiple elongated plate-shaped members. Alternatively, the metal member 255 of a frame shape may be cut out in a frame shape from a plate-shaped member or blanked out in a frame shape from a plate-shaped member and be provided as a one-piece product (seamless member). Furthermore, the metal member 255 may also be formed by stacking in layers and joining multiple metal members in the thickness direction of the insulated glazing.

Furthermore, the third surface 270 and/or the fourth surface 272 of the metal member 255 may be corrugated. Alternatively, the third surface 270 and/or the fourth surface 272 of the metal member 255 may be embossed. When such processing is performed on the third surface 270 and/or the fourth surface 272 of the metal member 255, the length of the actual corresponding part of the metal member 255 increases relative to its apparent length. Accordingly, it is possible to increase the "deformation allowance" of the metal member 255 at the time of deformation (contraction or expansion), thus making it possible to accommodate greater deformation.

### [Sealing Member 250]

As described above, the sealing member 250 is formed of the first and second joining layers 260 and 265 and the metal member 255.

A description is given below, with reference to FIG. 7, of the placement relationship of the members of the sealing member 250. The dimensions described below are described for a clearer image of the vacuum insulated glazing 200 according to the second embodiment of the present invention, and the dimensions of the sealing member 250 are not limited to these.

FIG. 7 illustrates an enlarged cross-sectional view of part of the sealing member 250.

In the case illustrated in FIG. 7, when the insulated glazing 200 is viewed in the thickness direction (the Z direction), the first joining layer 260 is placed inside the second joining layer 265, and there is no overlap between the joining layers 260 and 265.

Here, a minimum distance Xp in a direction parallel to the second surface 222 of the second glass substrate 220 between the outer end of the first bonded part 275 of the third surface 270 of the metal member 255 to which the first joining layer 260 is bonded and the inner end of the second bonded part 277 of the fourth surface 272 of the metal member 255 to which the second joining layer 265 is bonded is preferably in the range of 0.1 mm to 100 mm, and more preferably, in the range of 2 mm to 50 mm.

Furthermore, a minimum distance Xq between the center of the first joining layer 260 in a direction parallel to the first surface 212 (the X direction) and the center of the second joining layer 265 in a direction parallel to the second surface 222 (the X direction) is preferably in the range of 0.2 mm to 120 mm, and more preferably, in the range of 3 mm to 40 mm.

The maximum width (length in the X direction) of the first joining layer 260 and/or the second joining layer 265 may be in the range of, but is not limited to, for example, 0.1 mm to 15 mm. This width may be in the range of 1 mm to 7 mm.

A thickness (length in the Z direction) Za of the sealing member 250 is preferably in the range of 0.015 mm to 1 mm, and more preferably, in the range of 0.05 mm to 0.5 mm when the pressure in the gap is less than the atmospheric pressure, or preferably in the range of 0.015 mm to 15.7 mm, and more preferably, in the range of 3 mm to 13 mm when the gap is filled with an inert gas or the like at a certain pressure. The thickness Za of the sealing member 250 corresponds to the height of a gap 230.

In the case illustrated in FIG. 7, each of the cross sections of the first joining layer 260 and the second joining layer 265 is shown by a substantially rectangular shape with rounded corners. This, however, is a mere example, and the cross sections of the first joining layer 260 and the second joining layer 265 may have other shapes such as a substantial ellipse and a substantial trapezoid. Furthermore, the first joining layer 260 and the second joining layer 265 may be different in shape.

Furthermore, in the case of FIG. 7, there is no overlap between the positions in which the first joining layer 260 and the second joining layer 265 are provided when viewing in the thickness direction (the Z direction) of the insulated glazing 200. The positions in which the first joining layer 260 and the second joining layer 265 are provided, however, may overlap with each other when viewed in the thickness direction (the Z direction) of the insulated glazing 200.

### [Method of Producing Insulated Glazing according to Embodiment of the Present Invention]

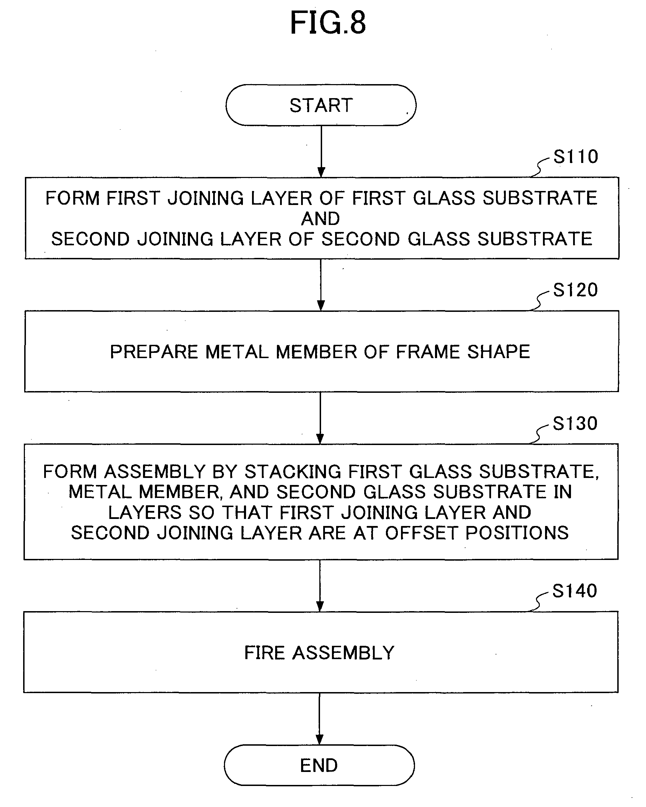

Next, a description is given, with reference to FIG. 8, of a method of producing insulated glazing according to an embodiment of the present invention.

FIG. 8 illustrates a flowchart of a method of producing insulated glazing according to an embodiment of the present invention.

As illustrated in FIG. 8, the method of producing insulated glazing according to an embodiment of the present invention includes the step (S110) of forming a first joining layer in a frame shape on a first surface of a first glass substrate and forming a second joining layer in a frame shape on a second surface of a second glass substrate, the step (S120) of preparing a metal member of a frame shape including a third surface and a fourth surface, the step (S130) of forming an assembly by stacking the first glass substrate, the metal member, and the second glass substrate in layers in this order, wherein the first glass substrate is placed with the first surface facing the third surface of the metal member and the second glass substrate is placed with the first surface facing the fourth surface, so that the second joining layer is in a position offset from a position of the first joining layer when the assembly is viewed in a stacking direction, and the step (S140) of bonding the first and second joining layers and the metal member by firing the assembly.

A description is given in detail below of each step.

In the following description, by way of example, a description is given of a method of producing insulated glazing according to the present invention, taking the vacuum insulated glazing 200 configured as illustrated in FIG. 5 as an example.

### [Step S110]

First, the first and second glass substrates 210 and 220 are prepared.

Furthermore, the first joining layer 260 is formed on the first glass substrate 210, and the second joining layer 265 is formed on the second glass substrate 220.

A description is given below, taking the case where the joining layer 260 is a solidified glass layer as an example, of the case of forming a first solidified glass layer in a peripheral portion of the first surface 212 of the first glass substrate 210.

In the case of forming the first solidified glass layer in a peripheral portion of the first glass substrate 210, paste for the first solidified glass layer is prepared. Normally, the paste includes glass frit, ceramic particles, a polymer, an organic binder, etc. The ceramic particles, however, may be omitted. The glass frit ends up in a glass component that is a component of the first solidified glass layer.

The prepared paste is applied on a peripheral portion of the first surface 212 of the first glass substrate 210.

Next, the first glass substrate 210 including the paste is dried. The conditions of the drying are not limited in particular as long as the organic binder in the paste is removed under the conditions. The drying may be performed by retaining the first glass substrate 210 at a temperature of 100°C to 200°C for approximately 30 minutes to approximately 1 hour.

Next, the first glass substrate 210 is subjected to heat treatment at high temperatures for preliminary firing of the paste. The conditions of the heat treatment are not limited in particular as long as the polymer included in the paste is removed under the conditions. The heat treatment may be performed by retaining the first glass substrate 210 in the temperature range of, for example, 300°C to 470°C for approximately 30 minutes to approximately 1 hour. As a result, the paste is fired, so that the first solidified glass layer is formed.

Likewise, a second solidified glass layer is formed in a peripheral portion of the second surface 222 of the second glass substrate 220. Here, it should be noted that the second solidified glass layer is formed so that the position in which the second solidified glass layer is formed is offset from the position in which the first solidified glass layer is formed in a view from above (the Z direction) when the two glass substrates 210 and 220 are stacked in layers.

### [Step S120]

Next, the metal member 255 of a frame shape is prepared.

As described above, the metal member 255 of a frame shape may be a one-piece product (seamless member) without joints or be formed by combining multiple members.

It is possible to easily produce the frame-shaped metal member 255 of a one-piece product (seamless member) by, for example, preparing a plate-shaped metal member and performing press cutting so as to cut off an inside portion of this plate-shaped metal member.

### [Step S130]

Next, an assembly is formed by combining the first and second glass substrates 210 and 220 and the metal member 255 of a frame shape.

At this point, the metal member 255 is stacked on the first and second glass substrates 210 and 220 so that part of the third surface 270 comes into contact with the first solidified glass layer and part of the fourth surface 272 comes into contact with the second solidified glass layer.

Furthermore, at this point, one or two or more spacers 290 may be placed between the first glass substrate 210 and the second glass substrate 220 as required.

A pressure may be applied to the assembly from the first glass substrate 210 and/or second glass substrate 220 side as required.

### [Step S140]

Next, the assembly is fired. The firing temperature and the firing time vary depending on the softening point of a solidified glass layer, etc. For example, after being retained for approximately 5 seconds to approximately 180 minutes, preferably, approximately 15 seconds to approximately 30 minutes (for example, 20 minutes) in a chamber at a temperature of approximately 350°C to approximately 600°C, preferably, 470°C to 560°C (for example, 490°C), the assembly may be extracted from the chamber and cooled to room temperature. The firing may be performed by heating not the entire assembly but at least part of the first and second solidified glass layers 260 and 265.

Furthermore, the first and second solidified glass layers may be pressed by pressing the third surface of the metal member and the fourth surface of the metal member during the firing of the assembly. By thus pressing the solidified glass layers, the strength of bonding to the metal member is increased. Furthermore, when the first glass substrate 210 is shaped so as to lie over and cover at least part of the second solidified glass layer 265 in a view from above (the Z direction) as illustrated in FIG. 5, it is possible for the first surface of the first glass substrate to press the third surface of the metal member the same as the second surface of the second glass substrate presses the fourth surface of the metal member, without employment of a special jig. Therefore, the first solidified glass layer 260 and the second solidified glass layer 265 become substantially equal in thickness, so that it is possible to easily equalize their bonding strengths.

Furthermore, the step of firing the assembly may be performed while applying a pressure of 25 kg/m² to 1000 kg/m² on the assembly, and is performed by, for example, applying a load onto the first glass substrate 210 with the assembly being fixed. Alternatively, the step of firing the assembly may be performed by holding the first glass substrate 210 and the second glass substrate 220 together with clamping means. By thus applying a load onto the assembly, it is possible to easily press the solidified glass layers with the first glass substrate 210 and the second glass substrate 220.

An increase in the temperature of the assembly softens the first and second solidified glass layers. As a result, the third surface 270 of the metal member 255 is bonded to the first solidified glass layer in the first bonded part 275, and the fourth surface 272 of the metal member 255 is bonded to the second solidified glass layer in the second bonded part 277. Accordingly, after the firing of the assembly, the gap 230 surrounded by the sealing member 250 is formed between the first and second glass substrates 210 and 220.

Thereafter, the gap 230 is depressurized using openings provided beforehand in the first glass substrate 210 and/or the second glass substrate 220. For example, the gas inside the gap 230 is replaced with an inert gas or the gap 230 is depressurized. Furthermore, the openings used for the depressurizing are sealed. As a result, the second vacuum insulated glazing 200 is produced.

The assembly may be fired in a reduced-pressure environment. That is, the firing is performed with the assembly being placed in a chamber in which the pressure is less than the atmospheric pressure. When the assembly is fired in a reduced-pressure environment, a vacuum is maintained in the gap 230 during the firing, so that the reduction of pressure is completed at the same time with the processing of the sealing member. Furthermore, there is no need to perforate the glass substrates, and there is no need for the pressure reduction process after firing.

In addition to the overall heating process, methods that locally heat the first and second solidified glass layers (such as infrared heating, electromagnetic heating, and laser emission) may be employed as methods of firing the assembly.

By the above-described process, it is possible to produce the vacuum insulated glazing 200 configured as illustrated in FIG. 5.

In the above description, a method of producing insulated glazing according to an embodiment of the present invention is described, taking the vacuum insulated glazing 200 configured as illustrated in FIG. 5 as an example.

It is clear to a person of ordinary skill in the art, however, that the above-described production method may also be applied, directly or with a slight change, to, for example, vacuum insulated glazing of another configuration (for example, the vacuum insulated glazing 300), "non-vacuum" insulated glazing, etc., in the same manner.

For example, as described above, the first joining layer 260 or the second joining layer 265 may be formed of a metal sprayed coating instead of a solidified glass layer. In this case, the metal member 255 is bonded to the joining layers formed of a metal sprayed coating by, for example, brazing or soldering at the stage of forming an assembly. Accordingly, the stability of the assembly is improved to control problems such as misalignment, so that it is possible to improve subsequent handleability of the assembly.

### INDUSTRIAL APPLICABILITY

The present invention may be used for vacuum insulated glazing and the like used for window glass of constructions.

Furthermore, the present application is based upon and claims the benefit of priority of Japanese Patent Application No. 2012-228423, filed on October 15, 2012, the entire contents of which are incorporated herein by reference.

### DESCRIPTION OF THE REFERENCE NUMERALS

- 100, 200, 300: vacuum insulated glazing
- 110, 210, 310: first glass substrate
- 112, 212, 312: first surface
- 120, 220, 320: second glass substrate
- 122, 222, 322: second surface
- 130, 230, 330: gap
- 150, 250, 350: sealing member
- 155, 255, 355: metal member
- 160, 260, 360: first joining layer
- 165, 265, 365: second joining layer
- 170, 270, 370: third surface
- 172, 272, 372: fourth surface
- 175, 275, 375: first bonded part
- 177, 277, 377: second bonded part

## Claims

1. Insulated glazing including a gap between a first surface of a first glass substrate and a second surface of a second glass substrate, the first and second surfaces facing each other, wherein:
the gap is hermetically sealed by a sealing member,
the sealing member includes a metal member of a frame shape and first and second joining layers, the metal member including a third surface and a fourth surface,
the first joining layer is placed in the frame shape on the first surface of the first glass substrate,
the second joining layer is placed in the frame shape on the second surface of the second glass substrate, and is in a position offset from a position of the first joining layer when viewed in a thickness direction of the insulated glazing,
the first joining layer is bonded to a part of the third surface of the metal member, and
the second joining layer is bonded to a part of the fourth surface of the metal member.

2. The insulated glazing as claimed in claim 1, wherein the insulated glazing is configured with a pressure inside the gap less than an atmospheric pressure.

3. The insulated glazing as claimed in claim 1 or 2, wherein an overlap is absent between the first joining layer and the second joining layer when the insulated glazing is viewed in a thickness direction thereof.

4. The insulated glazing as claimed in claim 3, wherein
the first joining layer is inside the second joining layer when the insulated glazing is viewed in the thickness direction thereof, and
a minimum distance in a direction parallel to the second surface of the second glass substrate between an outer end of a first bonded part and an inner end of a second bonded part is in a range of 0.1 mm to 100 mm,
wherein the first bonded part is a region of the third surface of the metal member to which the first joining layer is bonded and the second bonded part is a region of the fourth surface of the metal member to which the second joining layer is bonded.

5. The insulated glazing as claimed in any of claims 1 to 4, wherein at least one of the first joining layer and the second joining layer includes a solidified glass layer.

6. The insulated glazing as claimed in any of claims 1 to 5, wherein the metal member is a one-piece product free of a joint.

7. The insulated glazing as claimed in any of claims 1 to 6, wherein the metal member has a shape such that a height of the third surface changes from one end to another end of the third surface in a cross-sectional view.

8. The insulated glazing as claimed in any of claims 1 to 7, wherein at least one of the third surface and the fourth surface of the metal member is corrugated or embossed.

9. The insulated glazing as claimed in any of claims 1 to 8, wherein the first glass substrate has such a shape as to lie over and cover at least a part of the second joining layer when the insulated glazing is viewed in a thickness direction thereof.

10. A method of producing insulated glazing including first and second glass substrates stacked in layers with a gap interposed therebetween, comprising the steps of:
forming a first joining layer in a frame shape on a first surface of the first glass substrate and forming a second joining layer in the frame shape on a second surface of the second glass substrate;
preparing a metal member of the frame shape that includes a third surface and a fourth surface;
forming an assembly by stacking the first glass substrate, the metal member, and the second glass substrate in layers in order described, wherein the first glass substrate is placed with the first surface facing the third surface of the metal member and the second glass substrate is placed with the second surface facing the fourth surface of the metal member, so that the second joining layer is in a position offset from a position of the first joining layer when the assembly is viewed in a stacking direction thereof; and
firing the assembly to bond the first and second joining layers and the metal member.

11. The method of producing insulated glazing as claimed in claim 10, wherein at least one of the first joining layer and the second joining layer includes a solidified glass layer.

12. The method of producing insulated glazing as claimed in claim 10 or 11, wherein the metal member is a one-piece product free of a joint.

13. The method of producing insulated glazing as claimed in any of claims 10 to 12, wherein
the first glass substrate has such a shape as to lie over and cover at least a part of the second joining layer when the insulated glazing is viewed in a thickness direction thereof, and
the step of firing the assembly bonds the second joining layer and the metal member while pressing the third surface of the metal member by the first surface.

14. The method of producing insulated glazing as claimed in any of claims 10 to 13, wherein the step of firing the assembly is performed by retaining the assembly at a temperature of 350°C to 600°C for 5 seconds to 30 minutes and thereafter cooling the assembly to room temperature.

15. The method of producing insulated glazing as claimed in any of claims 10 to 14, wherein the step of firing the assembly is performed while applying a pressure of 25 kg/m² to 1000 kg/m² on the assembly.
